# EUROPÄISCHE PATENTSCHRIFT

(11) **EP 4 097 045 B1**
(45) Veröffentlichungstag und Bekanntmachung des Hinweises auf die Patenterteilung: **17.09.2025**
(21) Anmeldenummer: 20812222.6
(22) Anmeldetag: 19.11.2020
(51) Int. Cl.: C01B 3/34, C25B 1/23, C25B 1/042, C25B 15/08

(54) **VERFAHREN UND ANLAGE ZUR HERSTELLUNG VON WASSERSTOFF**
METHOD AND PLANT FOR PRODUCING HYDROGEN
MÉTHODE ET INSTALLATION DE PRODUCTION D'HYDROGÈNE

(30) Priorität: 27.01.2020 DE 102020000476
(43) Veröffentlichungstag der Anmeldung: 07.12.2022
(73) Patentinhaber: Linde GmbH, 82049 Pullach (DE)
(72) Erfinder: PESCHEL, Andreas, 82515 Wolfratshausen (DE); KOLLER, Ute, 76669 Bad Schönborn (DE); FAHR, Steffen, 40878 Ratingen (DE)
(74) Vertreter: Fischer, Werner
(86) Internationale Anmeldenummer: PCT/EP2020/025524
(87) Internationale Veröffentlichungsnummer: WO 2021/151453

(56) Entgegenhaltungen:
- WO-A1-2019/020515
- WO-A1-2019/147786
- DE-A1- 102013 102 969
- US-A1- 2007 122 339
- US-A1- 2015 152 562

## Beschreibung

Die Erfindung betrifft ein Verfahren zur Herstellung von Wasserstoff und eine entsprechende Anlage gemäß den jeweiligen Oberbegriffen der unabhängigen Patentansprüche.

### Stand der Technik

Zur Herstellung von Wasserstoff im großtechnischen Maßstab ist eine Reihe unterschiedlicher Verfahren bekannt und in gängigen Nachschlagewerken, beispielsweise im Artikel "Hydrogen" in Ullmann's Encyclopedia of Industrial Chemistry, 15. Juni 2000, DOI: 10.1002/14356007.a13_297, Abschnitt 4, "Production", beschrieben. Die Herstellung von Wasserstoff kann beispielsweise aus Kohle und Kohlenwasserstoffen in Form von Koksofengas oder allgemein durch die Vergasung, von gasförmigen, festen und flüssigen Kohlenstoffquellen wie Erdgas, Naphtha oder Kohle, erfolgen. Ein weiterer Weg zur Herstellung von Wasserstoff aus entsprechenden Kohlenstoffquellen umfasst die katalytische partielle Oxidation (POX, Partial Oxidation) und die katalytische Reformierung in unterschiedlichen Ausgestaltungen wie beispielsweise die Dampfreformierung oder autotherme Reformierung. Auch kombinierte Verfahren können verwendet werden.

Neben derartigen, nachfolgend als "nichtelektrolytisch" bezeichneten Synthesewegen kann Wasserstoff aber auch elektrolytisch aus Wasser hergestellt werden, wie in dem erwähnten Artikel in Ullmann's Encyclopedia of Industrial Chemistry insbesondere in Abschnitt 4.2, "Electrolysis" erläutert.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt bei Atmosphärendruck oder im industriellen Maßstab auch bei einem Druck von bis zu 30 bar. Neuere Entwicklungen bei der Wasserelektrolyse umfassen beispielsweise die Verwendung von protonenleitenden lonenaustauschmembranen (PEM, Proton Exchange Membrane), bei der das zu elektrolysierende Wasser an der Anodenseite bereitgestellt wird. Die genannten Verfahren zählen zu den sogenannten Niedertemperaturverfahren, bei denen das zu elektrolysierende Wasser in der Flüssigphase vorliegt. Daneben wird auch die sogenannte Dampfelektrolyse vorgenommen, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) und protonenleitenden Hochtemperaturmaterialien durchgeführt werden können. Letztere umfassen insbesondere dotiertes Zirkondioxid oder dotierte Oxide anderer seltener Erden, die bei mehr als 800 °C leitfähig werden.

Verfahren zur Abtrennung und Weiterbearbeitung von Wasserstoff aus entsprechenden Verfahren und zur Kombination von elektrolytischen und nichtelektrolytischen Wasserstoffherstellungsverfahren sind ebenfalls ansatzweise beschrieben. So offenbart beispielsweise die WO 2014/172038 A1 ein Verfahren, bei dem Wasserstoff elektrochemisch aus einem durch Reformierung gebildeten Gasgemisch abgetrennt und verdichtet wird. In der WO 2014/182376 A1 wird zusätzlicher Wasserstoff aus dem Restgas einer Druckwechseladsorption (PSA, Pressure Swing Adsorption) mittels einer Protonenaustauschmembran (PEM, Proton Exchange Membrane) gewonnen. Zudem ist die Nutzung von Kohlendioxid für eine elektrochemische Herstellung von Kohlenmonoxid beschrieben. Ferner schlägt beispielsweise die WO 2017/144403 A1 vor, unter Verwendung einer Festoxidelektrolysezelle in einem Gasgemisch aus einer Reformierung enthaltenes Kohlendioxid zu Kohlenmonoxid zu elektrolysieren.

DE 10 2013 102969 A1, US 2007/ 122339 A1 und US 2015/ 152562 A1 offenbaren Verfahren, die elektrolytische und nicht elektrolytische Wasserstoffherstellungsverfahren integrieren.

Weitere Möglichkeiten, elektrolytische und nichtelektrolytische Wasserstoffherstellungsverfahren zu integrieren, sind in der Literatur kaum beschrieben, jedoch grundsätzlich wünschenswert.

Die vorliegende Erfindung stellt sich daher die Aufgabe, ein verbessertes Verfahren zur Herstellung von Wasserstoff anzugeben, bei dem insbesondere die Synergieeffekte unterschiedlicher Herstellungsverfahren genutzt werden können.

### Offenbarung der Erfindung

Vor diesem Hintergrund schlägt die Erfindung ein Verfahren zur Herstellung von Wasserstoff und eine entsprechende Anlage mit den jeweiligen Merkmalen der unabhängigen Patentansprüche vor. Bevorzugte Ausgestaltungen sind Gegenstand der abhängigen Patentansprüche sowie der nachfolgenden Beschreibung.

Die vorliegende Erfindung schlägt vor, die Herstellung von Wasserstoff durch Dampfelektrolyse mit einem nichtelektrolytischen Verfahren zur Herstellung von Wasserstoff zu kombinieren.

Die vorliegende Erfindung schlägt dabei insgesamt ein Verfahren zur Herstellung von Wasserstoff vor, bei dem in einem nichtelektrolytischen Prozess der eingangs und nachfolgend erläuterten Art ein kohlenstoffhaltiger Einsatzstoff zu nichtelektrolytisch hergestelltem Wasserstoff und einem oder mehreren weiteren nichtelektrolytisch hergestellten Produkten umgesetzt wird. Unter Verwendung des nichtelektrolytischen Prozesses wird ferner Überschussdampf bereitgestellt.

Ist hier von der "Herstellung von Wasserstoff" in dem nichtelektrolytischen Prozess die Rede, schließt dies nicht aus, dass dort auch andere Produkte, insbesondere weitere Komponenten von typischem Synthesegas, gebildet werden können. Eine Herstellung von Wasserstoff kann daher in diesem Fall immer auch die Herstellung von Wasserstoff als Teil von Synthesegas umfassen.

Der nichtelektrolytische Prozess kann insbesondere eine Dampfreformierung (engl. Steam Methane Reforming, SMR), ggf. auch mit Kohlendioxidimport stromauf oder stromab des Reaktors, eine Partielle Oxidation (engl. Partial Oxidation, POX) oder beispielsweise das sogenannte Combined Reforming (CR) umfassen.

Bei der Dampfreformierung wird gemäß Gleichung (1) Erdgas mit Wasserdampf zu einem wasserstoffreichen Synthesegas umgesetzt. Bei der Partiellen Oxidation wird Sauerstoff eingesetzt wie aus Gleichung (2) ersichtlich. Die sogenannte Autotherme Reformierung (engl. Autothermal Reforming, ATR) stellt eine interne Kombination aus Dampfreformierung und Partieller Oxidation in einem Reaktor dar. Hierdurch können die Vorteile der Partiellen Oxidation (Bereitstellung thermischer Energie) und Dampfreformierung (hoher Wasserstoffgehalt) kombiniert werden. Das Combined Reforming verknüpft wiederum die beiden Verfahren Dampfreformierung und Autotherme Reformierung, jedoch in zwei getrennten Einheiten. Combined Reforming und Autotherme Reformierung haben den Vorteil, dass sie hinsichtlich des Verhältnisses von Wasserstoff zu Kohlenmonoxid sehr flexibel sind und das Synthesegas bereits unter erhöhtem Druck bereitgestellt wird.

| | | |
|---|---|---|
| CH₄ + H₂O 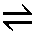 CO + 3 H₂ | ΔH⁰_{298K} = 206 kJ/mol | (1) |
| CH₄ + ½ O₂ 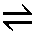 CO + 2 H₂ | ΔH⁰_{298K} = -36 kJ/mol | (2) |

Die nichtkatalytische Wasserstoffherstellung kann grundsätzlich, allerdings mit größerer Kohlenmonoxidbildung, unter Verwendung eines auf Kohlendioxid und Erdgas basierenden Verfahrens, z.B. des sogenannten Dry Reformings (DryRef, ggf. auch mit einem gewissen Dampfanteil, auch als Bi-Reformierung bezeichnet), erfolgen. Beim Dry Reforming wird Erdgas mit Kohlendioxid nach Gleichung (3) zu einem kohlenmonoxidreichen Synthesegas umgesetzt.

| | | |
|---|---|---|
| CH₄ + CO₂ 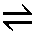 2 CO + 2 H₂ | ΔH⁰_{298K} = 247 kJ/mol | (3) |

Erfindungsgemäß ist vorgesehen, dass wenigstens zeitweise zumindest ein Teil des Überschussdampfs zur Bereitstellung von Einsatzdampf verwendet wird, und dass der Einsatzdampf mittels Dampfelektrolyse zu Elektrolysewasserstoff und Elektrolysesauerstoff umgesetzt wird.

Ist hier davon die Rede, dass "Einsatzdampf mittels Dampfelektrolyse zu Elektrolysewasserstoff und Elektrolysesauerstoff umgesetzt wird", sei analog zu den obigen Ausführungen zur nichtelektrolytischen Herstellung von Wasserstoff nicht ausgeschlossen, dass in einer entsprechenden Dampfelektrolyse auch andere Produkte, insbesondere weitere Elektrolyseprodukte, gebildet werden können. Dies ist insbesondere dann der Fall, wenn eine Ko-Elektrolyse von Wasserdampff und Kohlendioxid vorgenommen wird. Eine Herstellung von Wasserstoff kann daher in diesem Fall immer auch die Herstellung von Kohlenmonoxid als Teil eines entsprechenden Produktgemischs umfassen. Eine "Dampfelektrolyse" soll dabei hier eine Elektrolyse bezeichnen, der Wasserdampf zugeführt wird. Grundsätzlich kann im Rahmen der vorliegenden Erfindung die Dampfelektrolyse beispielsweise auch unter Verwendung von protonenleitenden Membranen durchgeführt werden, wie unter anderem bei E. Vøllestad et al., "Mixed proton and electron conducting double perovskite anodes for stable and efficient tubular proton ceramic electrolysers", Nature Materials 18, 2019, Seiten 752-759, beschrieben.

Bei der klassischen Wasserelektrolyse wird eine wässrige alkalische Lösung, typischerweise von Kaliumhydroxid, als Elektrolyt verwendet (AEL, Alkalische Elektrolyse, siehe auch oben). Die Elektrolyse mit einer uni- oder bipolaren Elektrodenanordnung erfolgt dabei bei Atmosphärendruck oder im industriellen Maßstab auch bei einem Druck von bis zu 30 bar. Neuere Entwicklungen bei der Wasserelektrolyse umfassen die Verwendung von protonenleitenden Ionenaustauschmembranen (SPE, Solid Polymer Electrolysis; PEM, Proton Exchange Membranes), bei der das zu elektrolysierende Wasser an der Anodenseite bereitgestellt wird. Die genannten Verfahren zählen zu den Niedertemperaturverfahren, bei denen das zu elektrolysierende Wasser in der Flüssigphase vorliegt. Daneben wird aber auch die im Rahmen der vorliegenden Erfindung verwendete Dampfelektrolyse vorgenommen, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden können. Letztere umfassen insbesondere dotiertes Zirkondioxid oder Oxide anderer seltener Erden, die üblicherweise bei mehr als 800 °C leitfähig werden. Der Begriff der Dampfelektrolyse soll nachfolgend sämtliche dieser Verfahren umfassen, sofern diesen Dampf zugeführt wird.

Zur elektrochemischen Herstellung von Kohlenmonoxid aus Kohlendioxid kann insbesondere eine Hochtemperaturelektrolyse, die unter Verwendung einer oder mehrerer Festoxidelektrolysezellen durchgeführt wird, zum Einsatz kommen. Hierbei bilden sich Sauerstoff auf der Anodenseite und Kohlenmonoxid auf der Kathodenseite gemäß Reaktionsgleichung (4):

CO₂ → CO + ½ O₂ (4)

Die elektrochemische Herstellung von Kohlenmonoxid aus Kohlendioxid ist beispielsweise in der WO 2014/154253 A1, der WO 2013/131778 A2, der WO 2015/014527 A1 und der EP 2 940 773 A1 beschrieben. Wird einer entsprechenden Hochtemperaturelektrolyse zusätzlich Wasserdampf zugeführt, handelt es sich um eine Ko-Elektrolyse, bei der sich Wasserstoff bildet. Auch hierbei handelt es sich damit um ein elektrolytisches Verfahren zur Herstellung von Wasserstoff im Sinne der Erfindung.

Die elektrochemische Herstellung von Kohlenmonoxid aus Kohlendioxid ist auch mittels Niedertemperaturelektrolyse an wässrigen Elektrolyten möglich. Hierbei laufen die Reaktionen gemäß den Reaktionsgleichungen (5) und (6) ab:

CO₂ + 2e⁻ + 2M⁺ + H₂O → CO + 2 MOH (5)

2 MOH → ½ O₂ + 2M⁺ +2e⁻ (6)

Bei der Niedertemperaturelektrolyse, die ggf. aber immer noch oberhalb der Verdampfungstemperatur von Wasser durchgeführt wird, wird eine Membran eingesetzt, durch welche die gemäß Reaktionsgleichung (5) benötigten bzw. gemäß Reaktionsgleichung (6) gebildeten positiven Ladungsträger (M⁺) von der Anoden- auf die Kathodenseite diffundieren. Im Gegensatz zur Hochtemperaturelektrolyse erfolgt der Transport der positiven Ladungsträger hier nicht in Form von Sauerstoffionen, sondern beispielsweise in Form von positiven Ionen des Elektrolytsalzes (eines Metallhydroxids, MOH). Ein Beispiel für ein entsprechendes Elektrolytsalz kann Kaliumhydroxid sein. In diesem Fall handelt es sich bei den positiven Ladungsträgern um Kaliumionen.

Weitere Ausführungsformen der Niedertemperaturelektrolyse umfassen beispielsweise die Verwendung von Protonenaustauschmembranen, durch die Protonen wandern, oder von sogenannten Anionenaustauschmembranen. Unterschiedliche Varianten sind beispielsweise bei Delacourt et al., J. Electrochem. Soc. 2008, 155, B42-B49, DOI: 10.1149/1.2801871, beschrieben. Auch hierbei kann Wasserstoff gebildet werden.

Das nichtelektrolytische Verfahren wird, wie erwähnt, derart betrieben, dass unter Verwendung desselben Überschussdampf bereitgestellt werden. "Überschussdampf" soll dabei eine Dampfmenge bezeichnen, die in dem nichtelektrolytischen Verfahren oder unter Verwendung des nichtelektrolytischen Verfahrens mittels Wärme, beispielsweise unter Verwendung von Brennern oder Abwärmedampferzeugern, gebildet, aber nicht in dem nichtelektrolytischen Verfahren selbst verbraucht, d.h. insbesondere zu Wasserstoff umgesetzt oder für Heizzwecke genutzt wird. Ersteres, d.h. die Umsetzung von Wasser zu Wasserstoff, erfolgt insbesondere in der Dampfreformierung oder autothermen Reformierung. In anderen Fällen, in denen Wasser nicht stofflich genutzt wird, steht aus einer Abwärmedampferzeugung ebenfalls Überschussdampf zur Verfügung.

Die vorliegende Erfindung schlägt insbesondere die Verwendung eines separaten Dampfsystems vor, das zur Bereitstellung des Einsatzdampfs in die Dampfelektrolyse verwendet wird. Dieses ist insbesondere zur Gewährleistung einer ausreichenden Reinheit des Einsatzdampfs für die Dampfelektrolyse vorgesehen. Das Dampfsystem kann insbesondere unter Verwendung von Abwärme aus dem nichtelektrolytischen Verfahren beheizt werden, wobei Dampf als Wärmeträger verwendet werden kann oder das Dampfsystem direkt über Wärmeaustauschflächen beheizt werden kann. Mit anderen Worten kann in dem erfindungsgemäßen Verfahren Dampf unter Verwendung des nichtelektrolytischen Prozesses bzw. entsprechender Abwärme bereitgestellt und zur Herstellung des Einsatzdampfs in dem weiteren Dampfsystem verwendet werden. Ebenso ist es aber auch möglich, das weitere Dampfsystem ohne Einsatz von Dampf mit Abwärme des nichtelektrolytischen Prozesses zu beheizen. Die Formulierung, wonach der Einsatzdampf "unter Verwendung" des Überschussdampfs bereitgestellt wird, kann dabei umfassen, dass der Einsatzdampf als ein Teil des Überschussdampfs bereitgestellt wird, aber auch, dass lediglich Wärme des Überschussdampfs für die Herstellung des Einsatzdampfs genutzt wird.

Mit nochmals anderen Worten ist im Rahmen der vorliegenden Erfindung die Nutzung des Überschussdampfs des konventionellen, nichtelektrolytischen Prozesses für die Dampfelektrolyse vorgesehen. Auf diese Weise ergibt sich eine erhöhte Wasserstoffausbeute. Durch ein separates Dampfsystem kann besonders reiner Dampf erhalten werden, so dass eine Alterung der Elektrolyse durch schlechte Dampfqualität vermieden werden kann. Das Kondensat des nicht umgesetzten Dampfes aus der Dampfelektrolyse kann beispielsweise wieder zu dem nichtelektrolytischen Prozess zur Dampfgewinnung geführt werden.

Während entsprechender Dampf in den genannten nichtelektrolytischen Prozessen oft bei hohem Druck vorliegt, kann er für die Dampfelektrolyse entspannt werden, insbesondere wenn eine Festelektrolytelektrolysezelle zum Einsatz kommt. Bei Einsatz einer alkalischen Hochdruckelektrolyse kann entsprechender Dampf aber auch bei ca. 40 bar genutzt werden. Im Rahmen der vorliegenden Erfindung kann auch eine Erzeugung von Niederdruckdampf in dem nichtelektrolytischen Prozess erfolgen, wobei der Niederdruckdampf vorteilhafterweise bei weniger als 5 bar, insbesondere mehr als 2 bar, gebildet wird. Auf diese Weise kann die Wärme aus dem nichtelektrolytischen Prozess besser genutzt werden. Bei Bedarf kann auch beispielsweise eine Wärmepumpe verwendet werden, die Wärme aus dem nichtelektrolytischen Prozess von unter 100 °C auf Niederdruckdampf-Niveau für die Dampfelektrolyse bringt.

Der Einsatzdampf wird im Rahmen der vorliegenden Erfindung insgesamt zumindest zeitweise in der Dampfelektrolyse genutzt und dabei zu weiterem Wasserstoff umgesetzt. Weil mittels des nichtelektrolytischen Verfahrens ebenfalls Wasserstoff gebildet wird, besteht ein besonderer Vorteil des erfindungsgemäßen Verfahrens dabei darin, dass ein Teil des in dem nichtelektrolytischen Verfahrens gebildeten Wasserstoffs in die Dampfelektrolyse geführt werden kann, um dort reduzierende Bedingungen zu schaffen. Die Erfindung sieht daher vor, dass zumindest zeitweise ein Teil des nichtelektrolytisch hergestellten Wasserstoffs mit dem Einsatzdampf der Dampfelektrolyse zugeführt wird. Auf diese Weise kann auf eine Rückführung von Wasserstoff von der Kathodenseite der Dampfelektrolyse verzichtet werden. Das Anfahren der Dampfelektrolyse wird vereinfacht, da von Anfang an Wasserstoff aus dem Verfahren selbst, nämlich dem nichtelektrolytischen Verfahren, bereitgestellt werden kann, der aus der Dampfelektrolyse noch nicht zur Verfügung steht.

Eine vorteilhafte Ausgestaltung der vorliegenden Erfindung umfasst einen ersten Betriebsmodus und einen zweiten Betriebsmodus, wobei in dem ersten Betriebsmodus zumindest der Teil des Überschussdampfs zur Bereitstellung des Einsatzdampfs verwendet wird, der mittels der Dampfelektrolyse zu dem Elektrolysewasserstoff und dem Elektrolysesauerstoff umgesetzt wird, und wobei in dem zweiten Betriebsmodus zumindest ein Teil des Überschussdampfs zur stattdessen Bereitstellung von elektrischer Energie verwendet wird und umgekehrt. Ein besonderer Vorteil dieser Ausgestaltung besteht in der Möglichkeit zu dynamischen Nutzung des Dampfes des nichtelektrolytischen Prozesses entweder zur Stromerzeugung in einer Turbine (zu Zeiten hoher Strompreise und geringen Stromangebots) oder zur Wasserstoffherstellung in der Dampfelektrolyse (zu Zeiten niedriger Strompreise und hohen Stromangebots). Das erfindungsgemäße Verfahren kann damit eine variable Stromabnahme je nach Stromangebot umfassen, wie sie insbesondere im Zusammenhang mit der Nutzung regenerativer Energiequellen vorteilhaft ist.

Wie bereits zuvor zur Dampfnutzung erläutert und unter Nennung der jeweiligen Vorteile beschrieben, kann in einer Ausgestaltung des Verfahrens die Bereitstellung des Einsatzdampfs unter Verwendung zumindest des Teils des Überschussdampfs umfassen, Wärme des Überschussdampfs oder beliebige weitere Wärme, insbesondere Abwärme, ohne stofflichen Austausch auf Wasser oder Dampf eines der Dampfelektrolyse zugeordneten Dampfsystems zu übertragen, in welchem der Einsatzdampf für die Dampfelektrolyse bereitgestellt wird. In einer anderen Ausgestaltung kann aber die Bereitstellung des Einsatzdampfs unter Verwendung zumindest des Teils des Überschussdampfs auch umfassen, zumindest den Teil des Überschussdampfs als den Einsatzdampf zu verwenden, insbesondere wenn der Überschussdampf in einem separaten Dampfsystem aus Abwärme des nichtelektrolytischen Prozesses gewonnen wird.

Eine besonders vorteilhafte Ausgestaltung des erfindungsgemäßen Verfahrens sieht vor, dass zumindest ein Teil des Elektrolysewasserstoffs zur Bearbeitung des kohlenstoffhaltigen Einsatzstoffs verwendet wird. Mit anderen Worten wird in dieser Ausgestaltung eine Nutzung des Wasserstoffs aus der Dampfelektrolyse innerhalb des nichtelektrolytischen Prozesses bzw. zur Bearbeitung von deren Einsatzstoff genutzt. Insbesondere zur Entschwefelung des kohlenstoffhaltigen Einsatzstoffs, beispielsweise von Erdgas, kann entsprechender Wasserstoff genutzt werden. Die Vorteile bestehen unter anderem darin, dass ein Recyclekompressor zur Entschwefelung eingespart und ein entsprechender nichtkatalytischer Prozess einfacher angefahren werden kann, weil von Beginn an Wasserstoff bereitsteht. Eine Verwendung des Elektrolysewasserstoffs ist insbesondere in einer Shiftreaktion zur Reduktion des typischerweise kupferhaltigen Katalysators beim Anfahren vorteilhaft.

Eine weitere vorteilhafte Ausgestaltung des erfindungsgemäßen Verfahrens umfasst, dass zumindest ein Teil des Elektrolysesauerstoffs thermisch und/oder stofflich in dem nichtelektrolytischen Prozess genutzt wird. Eine thermische Nutzung erfolgt insbesondere in einem Brenner, beispielsweise in einer Dampfreformierung. Auf diese Weise kann der hier der Sauerstoffanteil erhöht und die benötigte Luftmenge verringert werden, wodurch sich die Energieeffizienz verbessert. Auch ein Einsatz in einem sogenannten Oxyfuelbrenner in dem nichtkatalytischen Prozess oder eines Nebenbrenners, in dem beispielsweise brennbare Gase (Purgegase) aus dem nichtkatalytischen Prozess verbrannt werden, ist möglich. Der Vorteil der letzteren Variante besteht darin, dass gerade ein Nebenbrenner beispielsweise bei der autothermen Reformierung, der partiellen Oxidation und eines kombinierten Reformierungsverfahren nur eine vergleichsweise geringe Leistung aufweist. Dort genügt daher die produzierte Sauerstoffmenge aus der Elektrolyse, um einen Oxyfuelprozess (also eine Verbrennung mit Sauerstoff statt Luft) ohne zusätzlich importierten Sauerstoff zu realisieren. Der Oxyfuelprozess ist dann besonders effizient. Zudem kann aufgrund des fehlenden Stickstoffs Kohlendioxid einfach abgetrennt und für andere Prozesse verwendet werden.

In einer weiteren Ausgestaltung des erfindungsgemäß vorgesehenen Verfahrens kann die Abwärme des nichtelektrolytischen Prozesses für den Betrieb der Dampfelektrolyse und/oder Abwärme der Dampfelektrolyse für den Betrieb des nichtelektrolytischen Prozesses genutzt werden. Auf diese Weise wird die wechselseitige Wärmeintegration verbessert. Beispielsweise kann eine Nutzung von Niedertemperaturabwärme des nichtelektrolytischen Prozesses (bei typischerweise weniger als 100 °C) zur Aufheizung von in einer alkalischen Elektrolyse genutzter Lauge oder anderer Medien und Komponenten erfolgen. Die Elektrolyse kann auf diese Weise je nach Strompreis häufig an- und abgefahren werden und ist kann rasch auf Betriebstemperatur gebracht werden. Auch eine Wärmenutzung in einer Wärmepumpe kann in diesem Zusammenhang genutzt werden. Auch die Abwärme der Dampfelektrolyse und auch einer klassischen alkalischen Elektrolyse, die bei erhöhten Temperaturen betrieben wird (z.B. bis 150 °C) kann zur Dampfherstellung oder auch direkt mit einem Wärmetauscher genutzt werden, wobei entsprechender Dampf beispielsweise zum Betrieb des Reboilers einer Aminwäsche betrieben werden kann, die zur Abtrennung von Kohlendioxid aus dem Einsatzstoff, beispielsweise Erdgas, für den nichtelektrolytischen Prozess genutzt wird.

Weitere Ausgestaltungen der vorliegenden Erfindung umfassen insbesondere eine gemeinsame Nutzung in dem nichtelektrolytischen Prozess und in der Dampfelektrolyse verwendeter Apparate wie Trockner oder Wasseraufbereitungseinrichtungen. Schließlich kann in dem nichtelektrolytischen Prozesses auch ein Rauchgas gebildet werden, wobei zumindest ein Teil des Rauchgases als Spülgas in der Dampfelektrolyse verwendet wird.

Die Erfindung erstreckt sich auch, wie erwähnt, auf eine Anlage zur Herstellung von Wasserstoff. Diese ist mit Mitteln ausgestattet, die dafür eingerichtet sind, in einem nichtelektrolytischen Prozess einen kohlenstoffhaltiger Einsatzstoff zu nichtelektrolytisch hergestelltem Wasserstoff und einem oder mehreren weiteren nichtelektrolytisch hergestellten Produkten umzusetzen und in dem nichtelektrolytischen Prozess ferner Überschussdampf bereitzustellen.

Die erfindungsgemäße Anlage zeichnet sich durch Mittel aus, die dafür eingerichtet sind, wenigstens zeitweise zumindest einen Teil des Überschussdampfs zur Bereitstellung von Einsatzdampf zu verwenden und diesen mittels Dampfelektrolyse zu Elektrolysewasserstoff und Elektrolysesauerstoff umzusetzen.

Wie das erfindungsgemäß vorgeschlagene Verfahren ermöglicht auch die erfindungsgemäß vorgeschlagene Anlage eine Reduktion des Kohlendioxidfußabdrucks des nichtkatalytischen Prozesses sowie ein einfacheres Anfahren und eine verbesserte Energieeffizienz

Zu Merkmalen und Vorteilen der erfindungsgemäß vorgeschlagenen Anlage sei ausdrücklich auf die obigen Erläuterungen bezüglich des erfindungsgemäßen Verfahrens und seiner Ausgestaltungen verwiesen. Dies gilt auch für eine Anlage gemäß einer besonders bevorzugten Ausführungsform der vorliegenden Erfindung, die zur Durchführung eines Verfahrens eingerichtet ist, wie es zuvor in seinen Ausgestaltungen erläutert wurde.

Die Erfindung wird nachfolgend unter Bezugnahme auf die beigefügten Zeichnungen, welche bevorzugte Ausgestaltungen der vorliegenden Erfindung gegenüber dem Stand der Technik veranschaulichen, näher erläutert.

Kurze Beschreibung der Zeichnungen
Figur 1 veranschaulicht ein nicht erfindungsgemäßes Verfahren.
Figur 2 veranschaulicht ein Verfahren gemäß einer Ausführungsform der Erfindung.
Figur 3 veranschaulicht ein Verfahren gemäß einer Ausführungsform der Erfindung.

### Ausführliche Beschreibung der Zeichnungen

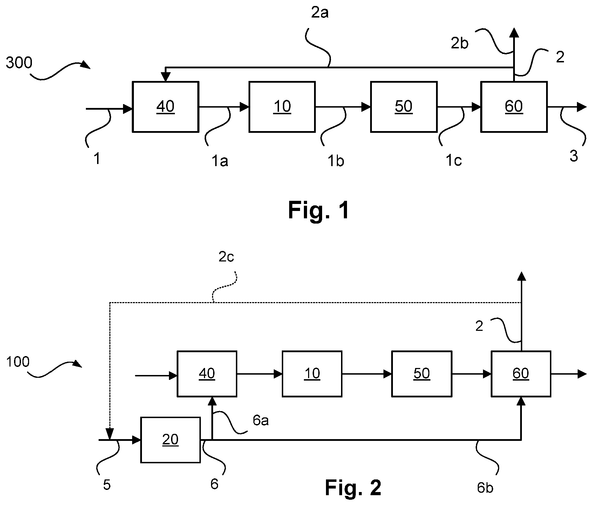

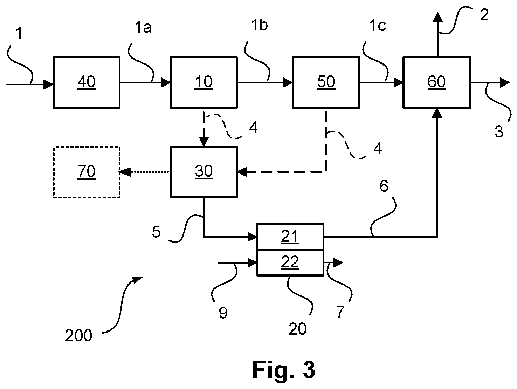

In Figur 1 ist ein nicht erfindungsgemäßes Verfahren schematisch veranschaulicht, wohingegen die Figuren 2 und 3 Verfahren gemäß Ausgestaltungen der Erfindung zeigen. Die Erläuterungen gelten dabei für entsprechende Anlagen in gleicher Weise. Baulich oder funktionell einander entsprechende Anlagenteile bzw. Verfahrensschritte sind dabei jeweils mit identischen Bezugszeichen angegeben und werden lediglich der Übersichtlichkeit halber nicht wiederholt erläutert.

In Figur 1 ist ein nicht erfindungsgemäßes Verfahren zur Herstellung von Wasserstoff veranschaulicht und insgesamt mit 300 bezeichnet. In dem Verfahren 300 wird einem nichtelektrolytischen Prozess 10, beispielsweise einer Dampfreformierung, ein kohlenstoffhaltiger Einsatzstoff 1 wie Erdgas zugeführt. Der Einsatzstoff 1 wird im hier veranschaulichten Beispiel einer Bearbeitung 40 unterworfen, beispielsweise einer Entschwefelung unter Verwendung von Wasserstoff. Der entsprechend bearbeitete Einsatzstoff ist mit 1a bezeichnet. Dem nichtelektrolytischen Prozess 10 ggf. zugeführte weitere Stoffströme sind nicht veranschaulicht.

In dem nichtelektrolytischen Prozess 10 wird ein wasserstoffhaltiges, aber insbesondere auch weitere Komponenten wie Kohlenmonoxid aufweisendes Produktgemisch erhalten und, wie mit 1b veranschaulicht, aus dem nichtelektrolytischen Prozess 10 ausgeführt. Das Produktgemisch 1b kann beispielsweise einer Wärmerückgewinnung 50 und, nach einer entsprechenden Abkühlung, in Form eines Stoffstroms 1c einer Wasserstoffabtrennung 60 unterworfen werden. In der Wasserstoffabtrennung 60 wird nichtelektrolytisch hergestellter Wasserstoff in Form eines Stoffstroms 2 abgezogen und, wie hier veranschaulicht, zu einem Teil 2a in die Bearbeitung 40 des Einsatzstoffs 1, beispielsweise zur Entschwefelung, zurückgeführt. Wie mit 2b veranschaulicht, kann weiterer nichtelektrolytisch hergestellter Wasserstoff als Produkt aus dem Verfahren 300 ausgeführt werden. Nichtelektrolytisch gebildete weitere Produkte, insbesondere Kohlenmonoxid, können in Form eines Stoffstroms 3 ausgeleitet werden.

Das in Figur 2 veranschaulichte Verfahren 100 gemäß einer Ausführungsform der vorliegenden Erfindung umfasst die bereits in Figur 1 zu dem Verfahren 300 erläuterten Verfahrensschritte 10, 40, 50 und 60. Zusätzlich ist hier eine Dampfelektrolyse 20 veranschaulicht, in der Einsatzdampf 5 zu Elektrolysewasserstoff 6 und hier nicht gesondert veranschaulichten und erst in Figur 3 gezeigtem Elektrolysesauerstoff 7 umgesetzt wird. Der Einsatzdampf 5 kann insbesondere unter Verwendung von hier ebenfalls nicht gesondert veranschaulichten Überschussdampf 4 aus dem nichtelektrolytischen Prozess 10 bereitgestellt werden.

Wie hier veranschaulicht, wird ein mit 6a bezeichneter Teilstrom des Elektrolysewasserstoffs 6 aus der Dampfelektrolyse 20 wie gemäß Figur 1 der nichtelektrolytisch bereitgestellte Wasserstoff 2a, aber ansonsten zu demselben Zweck, in die Bearbeitung 40 des Einsatzstoffs 1 eingespeist. Ein weiterer Anteil wird, wie mit 6b veranschaulicht, in die Wasserstoffabtrennung 60 geführt, wo der Elektrolysewasserstoff des Teilstroms 6b bei Bedarf zusammen mit dem nichtelektrolytisch bereitgestellten Wasserstoff des Stoffstroms 1c aufbereitet werden kann. Auf diese Weise kann beispielsweise eine gemeinsame Trocknung genutzt werden. Der Elektrolysewasserstoff des Teilstroms 6b kann dabei in den nichtelektrolytisch bereitgestellten Wasserstoff 2 überführt werden.

Wie in Form eines gestrichelten Stoffstroms 2c veranschaulicht, wird beim Anfahren ein Teil des Wasserstoffs zur Herstellung reduzierender Bedingungen zu der Dampfelektrolyse 20 zurückgeführt.

Das in Figur 3 veranschaulichte Verfahren 200 gemäß einer Ausführungsform der vorliegenden Erfindung umfasst die bereits in Figur 1 zu dem Verfahren 300 und in Figur 2 zu dem Verfahren 100 erläuterten Verfahrensschritte 10, 40, 50 und 60. Zusätzlich ist hier die Dampfelektrolyse 20 mit einer Kathodenseite 21 und einer Anodenseite 22 und dem gebildeten Elektrolysesauerstoff 7 gezeigt. Die Anodenseite 9 kann insbesondere mit einem Spülgas 9 gespült werden, das unter Verwendung von Abgas bzw. Rauchgas aus dem nichtelektrolytischen Prozess 10 gespült werden kann.

Besonders geeignet ist dazu ein Rauchgas, das schwefelfrei ist. Dazu wird der Einsatz zu einem entsprechenden der Brenner ggf. mit dem Einsatz zum Prozess entschwefelt.

Figur 3 zeigt in dem Verfahren 200 ferner ein separates Dampfsystem 30, dem entweder, wie gestrichelt dargestellt, Überschussdampf 4 aus dem nichtelektrolytischen Prozess 10 bzw. der nachgeschalteten Wärmerückgewinnung 50 oder auch nur entsprechende Wärme zugeführt werden kann. Auf diese Weise kann entweder ausreichend reiner Einsatzdampf 5 unter Verwendung des Überschussdampfs 4 oder entsprechender Wärme bereitgestellt werden.

Eine Zuspeisung von Dampf in die Bearbeitung 40 ist hier nicht gesondert veranschaulicht, ebensowenig wie die Einspeisung von Wasserstoff 2c in die Dampfelektrolyse, kann aber in vorgesehen sein. Der Elektrolysesauerstoff 7 kann auch in dem nichtelektrolytischen Prozess 10, entweder stofflich oder zur sauerstoffunterstützten Verbrennung eines Brennstoffs, genutzt werden.

Wie gestrichelt veranschaulicht, kann Dampf aus dem Dampfsystem, aber auch beispielsweise Überschussdampf 4, wahlweise und bei entsprechendem Bedarf auch zur Erzeugung von elektrischer Energie in einer Generatoreinheit 70 genutzt werden.

Es versteht sich, dass alle isoliert in Bezug auf bestimmte Figuren bzw. Ausführungsbeispiele beschriebenen Merkmale auch bei anderen Ausführungsbeispielen, falls in Kombination beschrieben alleine, oder falls alleine beschrieben in Kombination, eingesetzt werden können.

## Patentansprüche

1. Verfahren (100, 200) zur Herstellung von Wasserstoff, bei dem in einem nichtelektrolytischen Prozess (10) ein kohlenstoffhaltiger Einsatzstoff (1) zu nichtelektrolytisch hergestelltem Wasserstoff (2) und einem oder mehreren weiteren nichtelektrolytisch hergestellten Produkten (3) umgesetzt wird, wobei unter Verwendung des nichtelektrolytischen Prozesses (10) ferner Überschussdampf (4) bereitgestellt wird, von dem wenigstens zeitweise zumindest ein Teil zur Bereitstellung von Einsatzdampf (5) verwendet wird, wobei der Einsatzdampf (5) durch Dampfelektrolyse (20) zu Elektrolysewasserstoff (6) und Elektrolysesauerstoff (7) umgesetzt wird, **dadurch gekennzeichnet, dass** zumindest zeitweise ein Teil des nichtelektrolytisch hergestellten Wasserstoffs (1) mit dem Einsatzdampf (5) der Dampfelektrolyse (20) zugeführt wird.

2. Verfahren (100, 200) nach Anspruch 1, bei dem der nichtelektrolytische Prozess eine Reformierung in Form einer Dampfreformierung, einer Partiellen Oxidation, einer Autothermen Reformierung, eines Combined Reforming oder eines Dry Reformings und/oder die Dampfelektrolyse eine Dampfelektrolyse mit alkalischen Elektrolyten, insbesondere mit einer Polysulfonmembran, eine Dampfelektrolyse unter Verwendung einer Festoxidelektrolysezelle und/oder eine Hochtemperatur-Koelektrolyse mit Kohlendioxid umfasst.

3. Verfahren (100, 200) nach einem der vorstehenden Ansprüche, das einen ersten Betriebsmodus und einen zweiten Betriebsmodus umfasst, wobei in dem ersten Betriebsmodus zumindest der Teil des Überschussdampfs (4) zur Bereitstellung des Einsatzdampfs (5) verwendet wird, der mittels der Dampfelektrolyse (20) zu dem Elektrolysewasserstoff (6) und dem Elektrolysesauerstoff (7) umgesetzt wird, und in dem zweiten Betriebsmodus zumindest ein Teil des Überschussdampfs (4) zur Bereitstellung von elektrischer Energie verwendet wird.

4. Verfahren (100, 200) nach einem der vorstehenden Ansprüche, bei dem die Bereitstellung des Einsatzdampfs (5) unter Verwendung zumindest des Teils des Überschussdampfs (4) umfasst, Wärme des Überschussdampfs (4) oder weitere Abwärme ohne stofflichen Austausch auf Wasser oder Dampf eines der Dampfelektrolyse (20) zugeordneten Dampfsystems (30) zu übertragen, in welchem der Einsatzdampf (5) für die Dampfelektrolyse (20) bereitgestellt wird.

5. Verfahren (100, 200) nach einem der vorstehenden Ansprüche, bei dem die Bereitstellung des Einsatzdampfs (5) unter Verwendung zumindest des Teils des Überschussdampfs (4) umfasst, zumindest den Teil des Überschussdampfs (4) als den Einsatzdampf (5) zu verwenden.

6. Verfahren (100, 200) nach einem der vorstehenden Ansprüche, bei dem zumindest ein Teil des Elektrolysewasserstoffs (6) zur Bearbeitung (40) des kohlenstoffhaltigen Einsatzstoffs (1) verwendet wird.

7. Verfahren (100, 200) nach einem der vorstehenden Ansprüche, bei dem zumindest ein Teil des Elektrolysewasserstoffs (6) zur Reduktion eines Shiftkatalysators verwendet wird.

8. Verfahren (100, 200) nach einem der vorstehenden Ansprüche, bei dem zumindest ein Teil des Elektrolysesauerstoffs (7) thermisch und/oder stofflich in dem nichtelektrolytischen Prozess (10) genutzt wird.

9. Verfahren (100, 200) nach einem der vorstehenden Ansprüche, bei dem Abwärme des nichtelektrolytischen Prozesses (10) für den Betrieb der Dampfelektrolyse (20) und/oder Abwärme der Dampfelektrolyse (20) für den Betrieb des nichtelektrolytischen Prozesses (10) genutzt wird.

10. Verfahren (100, 200) nach einem der vorstehenden Ansprüche, bei dem in der nichtelektrolytischen Prozesses (10) und in der Dampfelektrolyse (20) verwendete Apparate gemeinsam genutzt werden.

11. Verfahren (100, 200) nach einem der vorstehenden Ansprüche, bei dem in dem nichtelektrolytischen Prozesses (10) ein Rauchgas gebildet wird, wobei zumindest ein Teil des Rauchgases als Spülgas in der Dampfelektrolyse (20) verwendet wird.

12. Anlage zur Herstellung von Wasserstoff, mit ersten Mitteln, die dafür eingerichtet sind, in einem nichtelektrolytischen Prozess (10) einen kohlenstoffhaltigen Einsatzstoff (1) zu nichtelektrolytisch hergestelltem Wasserstoff (1) umzusetzen und Überschussdampf (4) bereitzustellen, sowie zweiten Mitteln, die dafür eingerichtet sind, wenigstens zeitweise zumindest einen Teil des Überschussdampfs (4) zur Bereitstellung von Einsatzdampf (5) zu verwenden und den Einsatzdampf (5) mittels Dampfelektrolyse (20) zu Elektrolysewasserstoff (6) und Elektrolysesauerstoff (7) umzusetzen, **gekennzeichnet durch** eine strömungstechnische Verbindung zwischen den ersten und den zweiten Mitteln, über die zumindest zeitweise ein Teil des nichtelektrolytisch hergestellten Wasserstoffs (1) mit dem Einsatzdampf (5) der Dampfelektrolyse (20) zugeführt werden kann.

## Claims

1. A method (100, 200) for producing hydrogen, in which, in a non-electrolytic process (10), a carbonaceous feed material (1) is converted to non-electrolytically produced hydrogen (2) and one or more further non-electrolytically produced products (3), wherein excess steam (4) is furthermore provided using the non-electrolytic process (10), at least a part of the excess steam being used at least intermittently to provide feed steam (5), wherein the feed steam (5) is converted by means of steam electrolysis (20) to electrolytic hydrogen (6) and electrolytic oxygen (7), **characterized in that** at least a part of the non-electrolytically produced hydrogen (1) together with the feed steam (5) is supplied to the steam electrolysis (20) at least intermittently.

2. The method (100, 200) according to claim 1, in which the non-electrolytic process comprises reforming in the form of steam methane reforming, partial oxidation, autothermal reforming, combined reforming, or dry reforming, and/or the steam electrolysis comprises a steam electrolysis with alkaline electrolytes, in particular with a polysulfone membrane, a steam electrolysis using a solid oxide electrolysis cell, and/or a high-temperature co-electrolysis with carbon dioxide.

3. The method (100, 200) according to any of the preceding claims, comprising a first operating mode and a second operating mode, wherein in the first operating mode, at least the part of the excess steam (4) that is converted by means of steam electrolysis (20) to the electrolytic hydrogen (6) and the electrolytic oxygen (7) is used for providing the feed steam (5), and in the second operating mode, at least a part of the excess steam (4) is used for providing electrical energy.

4. The method (100, 200) according to any of the preceding claims, in which the provision of the feed steam (5) using at least the part of the excess steam (4) comprises transferring heat of the excess steam (4) or further waste heat without a material exchange to water or steam of a steam system (30) associated with the steam electrolysis (20), in which steam system the feed steam (5) is provided for steam electrolysis (20).

5. The method (100, 200) according to any of the preceding claims, in which the provision of the feed steam (5) using at least the part of the excess steam (4) comprises using at least the part of the excess steam (4) as the feed steam (5).

6. The method (100, 200) according to any of the preceding claims, in which at least a part of the electrolytic hydrogen (6) is used for processing (40) the carbonaceous feed material (1).

7. The method (100, 200) according to any of the preceding claims, in which at least a part of the electrolytic hydrogen (6) is used for reducing a shift catalyst.

8. The method (100, 200) according to any of the preceding claims, in which at least a part of the electrolytic oxygen (7) is used thermally and/or materially in the non-electrolytic process (10).

9. The method (100, 200) according to any of the preceding claims, in which waste heat of the non-electrolytic process (10) is used for operating the steam electrolysis (20) and/or waste heat of the steam electrolysis (20) is used for operating the non-electrolytic process (10).

10. The method (100, 200) according to any of the preceding claims, in which apparatuses used in the non-electrolytic process (10) and in the steam electrolysis (20) are used together.

11. The method (100, 200) according to any of the preceding claims, in which a flue gas is formed in the non-electrolytic process (10), wherein at least a part of the flue gas is used as purge gas in the steam electrolysis (20).

12. A plant for producing hydrogen, comprising first means configured to convert, in a non-electrolytic process (10), a carbonaceous feed material (1) to non-electrolytically produced hydrogen (1) and to provide excess steam (4), and comprising second means configured to use at least a part of the excess steam (4) at least intermittently to provide feed steam (5) and to convert the feed steam (5) to electrolytic hydrogen (6) and electrolytic oxygen (7) by means of steam electrolysis (20), **characterized by** a fluidic connection between the first and the second means, via which a part of the non-electrolytically produced hydrogen (1) can be supplied together with the feed steam (5) to the steam electrolysis (20) at least intermittently.

## Revendications

1. Procédé (100, 200) de production d'hydrogène dans lequel, dans un processus non électrolytique (10), une matière d'alimentation contenant du carbone (1) est transformée en hydrogène produit par voie non électrolytique (2) et en un ou plusieurs autres produits produits par voie non électrolytique (3), dans lequel de la vapeur excédentaire (4) est en outre mise à disposition à l'aide du processus non électrolytique (10), vapeur excédentaire dont au moins une partie est utilisée au moins temporairement pour la mise à disposition de la vapeur d'alimentation (5), dans lequel la vapeur d'alimentation (5) est transformée par électrolyse de vapeur (20) en hydrogène d'électrolyse (6) et en oxygène d'électrolyse (7), **caractérisé en ce qu'**une partie de l'hydrogène produit par voie non électrolytique (1) est amenée au moins temporairement avec la vapeur d'alimentation (5) à l'électrolyse de vapeur (20).

2. Procédé (100, 200) selon la revendication 1, dans lequel le processus non électrolytique comprend un reformage sous la forme d'un reformage à vapeur, d'une oxydation partielle, d'un reformage autothermique, d'un reformage combiné ou d'un reformage à sec et/ou l'électrolyse de vapeur comprend une électrolyse de vapeur comportant des électrolytes alcalins, en particulier comportant une membrane en polysulfone, une électrolyse de vapeur à l'aide d'une cellule d'électrolyse d'oxyde solide et/ou une co-électrolyse à haute température comportant du dioxyde de carbone.

3. Procédé (100, 200) selon l'une des revendications précédentes, comprenant un premier mode de fonctionnement et un second mode de fonctionnement, dans lequel, dans le premier mode de fonctionnement, au moins la partie de la vapeur excédentaire (4) est utilisée pour la mise à disposition de la vapeur d'alimentation (5) qui est transformée en l'hydrogène d'électrolyse (6) et en l'oxygène d'électrolyse (7) au moyen de l'électrolyse de vapeur (20) et, dans le second mode de fonctionnement, au moins une partie de la vapeur excédentaire (4) est utilisée pour la mise à disposition de l'énergie électrique.

4. Procédé (100, 200) selon l'une des revendications précédentes, dans lequel la mise à disposition de la vapeur d'alimentation (5) à l'aide d'au moins la partie de la vapeur excédentaire (4) comprend le transfert de chaleur de la vapeur excédentaire (4) ou d'une autre chaleur perdue sans échange de matière à de l'eau ou à la vapeur d'un système de vapeur (30) associé à l'électrolyse de vapeur (20), système de vapeur dans lequel la vapeur d'alimentation (5) est mise à disposition à l'électrolyse de vapeur (20).

5. Procédé (100, 200) selon l'une des revendications précédentes, dans lequel la mise à disposition de la vapeur d'alimentation (5) à l'aide d'au moins la partie de la vapeur excédentaire (4) comprend l'utilisation d'au moins la partie de la vapeur excédentaire (4) comme vapeur d'alimentation (5).

6. Procédé (100, 200) selon l'une des revendications précédentes, dans lequel au moins une partie de l'hydrogène d'électrolyse (6) est utilisée pour le traitement (40) de la matière d'alimentation contenant du carbone (1).

7. Procédé (100, 200) selon l'une des revendications précédentes, dans lequel au moins une partie de l'hydrogène d'électrolyse (6) est utilisée pour la réduction d'un catalyseur de conversion.

8. Procédé (100, 200) selon l'une des revendications précédentes, dans lequel au moins une partie de l'oxygène d'électrolyse (7) est utilisée thermiquement et/ou matériellement dans le processus non électrolytique (10).

9. Procédé (100, 200) selon l'une des revendications précédentes, dans lequel de la chaleur perdue du processus non électrolytique (10) est utilisée pour le fonctionnement de l'électrolyse de vapeur (20) et/ou de la chaleur perdue de l'électrolyse de vapeur (20) est utilisée pour le fonctionnement du processus non électrolytique (10).

10. Procédé (100, 200) selon l'une des revendications précédentes, dans lequel des appareils utilisés dans le processus non électrolytique (10) et dans l'électrolyse de vapeur (20) sont utilisés conjointement.

11. Procédé (100, 200) selon l'une des revendications précédentes, dans lequel un gaz de fumée est formé dans le processus non électrolytique (10), dans lequel au moins une partie du gaz de fumée est utilisée comme gaz de balayage dans l'électrolyse de vapeur (20).

12. Installation de production d'hydrogène, comportant de premiers moyens qui sont configurés pour transformer, dans un processus non électrolytique (10), une matière d'alimentation contenant du carbone (1) en hydrogène produit par voie non électrolytique (1) et pour mettre à disposition de la vapeur excédentaire (4), ainsi que de seconds moyens qui sont configurés pour utiliser au moins temporairement au moins une partie de la vapeur excédentaire (4) pour la mise à disposition de la vapeur d'alimentation (5) et pour transformer la vapeur d'alimentation (5) au moyen d'une électrolyse de vapeur (20) en hydrogène d'électrolyse (6) et en oxygène d'électrolyse (7), **caractérisée par** un raccordement par liaison fluidique entre les premiers et les seconds moyens, par l'intermédiaire duquel une partie de l'hydrogène produit par voie non électrolytique (1) peut être amenée au moins temporairement avec la vapeur d'alimentation (5) à l'électrolyse de vapeur (20).
